# EUROPEAN PATENT SPECIFICATION

(11) **EP 3 279 001 B1**
(45) Date of publication and mention of the grant of the patent: **23.01.2019**
(21) Application number: 17183418.7
(22) Date of filing: 26.07.2017
(51) Int. Cl.: B41J 25/00

(54) **SYSTEM AND METHOD FOR ACTIVE PRINTING CONSISTENCY CONTROL AND DAMAGE PROTECTION**
SYSTEM UND VERFAHREN ZUR AKTIVEN DRUCKKONSISTENZSTEUERUNG UND BESCHÄDIGUNGSSCHUTZ
SYSTÈME ET PROCÉDÉ DE RÉGULATION DE COHÉRENCE D'IMPRESSION ACTIF ET DE PROTECTION CONTRE LES DOMMAGES

(30) Priority: 04.08.2016 US 201615228521
(43) Date of publication of application: 07.02.2018
(73) Proprietor: Datamax-O'Neil Corporation, Orlando, FL 32808 (US)
(72) Inventor: LAU, Fong Lin, Morris Plains, NJ New Jersey 07950 (US); CHENG, Yong Chiap, Morris Plains, NJ New Jersey 07950 (US); LIU, Zhiyong, Morris Plains, NJ New Jersey 07950 (US)
(74) Representative: Houghton, Mark Phillip

(56) References cited:
- US-A1- 2008 144 270
- US-A1- 2009 200 378
- US-A1- 2013 286 215

## Description

### FIELD OF THE INVENTION

The present invention relates generally to imaging systems and, in particular, a system and method for improved fall detection.

### BACKGROUND

Sometimes, a mobile printer will be dropped during operation. A typical method of dealing with this situation is discussed in U.S. Patent Application Publication Number 20080144270 which discloses a data storage device having read/write heads. Accelerometer sensors are used to detect the free fall condition of portable devices having these storage devices. Whenever a freefall condition is detected the read write head of these storage devices is parked for safety purposes. Therefore, a need exists for continual monitoring of the sensors to determine when the readings are under a threshold to resume operation of the printer.

### SUMMARY

Accordingly, in one aspect, the present invention embraces an imaging system comprising: a thermal printhead configured to operate in a first position; at least one sensor configured to detect an aspect of motion (e.g., when motion of the imaging system has reached a predetermined limit) and cause a controller to halt operation of the thermal printhead and move a thermal printhead to a second position when the signal is above a first predetermined threshold; and the at least one sensor further configured to detect when the motion of the imaging system is under the predetermined limit and cause the controller move the thermal printhead to the first position to resume operation.

In another aspect, the present invention embraces an imaging system that includes a thermal printhead configured to operate in a first position, at least one sensor configured to detect an aspect of motion of the imaging system and output a signal, and a controller to halt operation of the thermal printhead and move the thermal printhead to a second position when the signal is above a first predetermined threshold and to move the thermal printhead to the first position to resume operation when the signal is below a second predetermined threshold. In an exemplary embodiment, the first predetermined threshold and the second predetermined threshold are the same.

In yet another aspect, the present invention embraces a method of active consistency control and damage protection in an imaging system that includes starting a print job in an imaging system, calculating through at least one sensor motion values at different positions of the imaging system to determine if the motion values are greater than a predetermined value, if the sensors motion values are greater than a predetermined value, moving a thermal printhead of the imaging system from a first operating position to a second, non-operating position, continually monitoring the at least one sensor motion values to determine when the motion of the imaging system is below the predetermined value, and moving the thermal printhead from the second position to the first position to resume the print job.

In yet another aspect, the present invention embraces a method of damage protection in an imaging system including starting a print job in an imaging system, calculating through at least one sensor aspects of motion values of the imaging system to determine if the aspects of motion values are greater than a predetermined value, if the sensors aspects of motion values are greater than a predetermined value, moving a thermal printhead of the imaging system from a first operating position to a second, non-operating position, monitoring the at least one sensor aspects of motion values to determine when the motion of the imaging system is below the predetermined value, and moving the thermal printhead from the second position to the first position to resume the print job.

In yet another aspect, the present invention embraces a method including calculating aspects of motion measured by at least one sensor on an imaging system, if the calculated aspects of motion exceed a first predetermined threshold, halting, with a controller in the imaging system, operation of a thermal printhead in the imaging system and moving the thermal printhead, and after the calculated aspects of motion exceed the first predetermined threshold and then are below a second predetermined threshold, moving the thermal printhead to a first operating position. In an exemplary embodiment, the first predetermined threshold and the second predetermined threshold are the same. In another exemplary embodiment, the aspects of motion comprise vibration, shock, and acceleration. In yet another exemplary embodiment, the first predetermined threshold is 1 G-force. In yet another exemplary embodiment, the at least one sensor is a multi-axial accelerometer. In yet another exemplary embodiment, the method includes calculating aspects of motion measured by at least three sensors on different locations of the imaging system (e.g., four sensors on corners of the imaging system). In yet another exemplary embodiment, the method includes resuming a printing job after moving the thermal printhead to the first operating position.

The foregoing illustrative summary, as well as other exemplary objectives and/or advantages of the invention, and the manner in which the same are accomplished, are further explained within the following detailed description and its accompanying drawings.

### BRIEF DESCRIPTION OF THE DRAWINGS

Figure 1 is a perspective view of an imaging system such as a mobile printer.
Figure 2 is a schematic view of an example of a thermal printhead used in the printer embodiment of Figure 1.
Figure 3 schematically depicts the layout of the mobile printer of Figures 1 and 2 having a thermal printhead (TPH) located near a front liquid crystal display (LCD).
Figure 4 is a flowchart of the freefall detection and protection method disclosed herein.

### DETAILED DESCRIPTION

The present invention is an imaging system freefall detection and protection mechanism. Imaging systems such as printers may be subject to vibration or free fall during printing. This is more likely to happen for a mobile printer. In such cases, the printing performance will be adversely affected or the thermal printhead (TPH) in the printer could be damaged. This disclosure describes a system and method of solving this problem by measuring the G-forces at multiple axes using a plurality of sensors to determine if it is safe to start operation again.

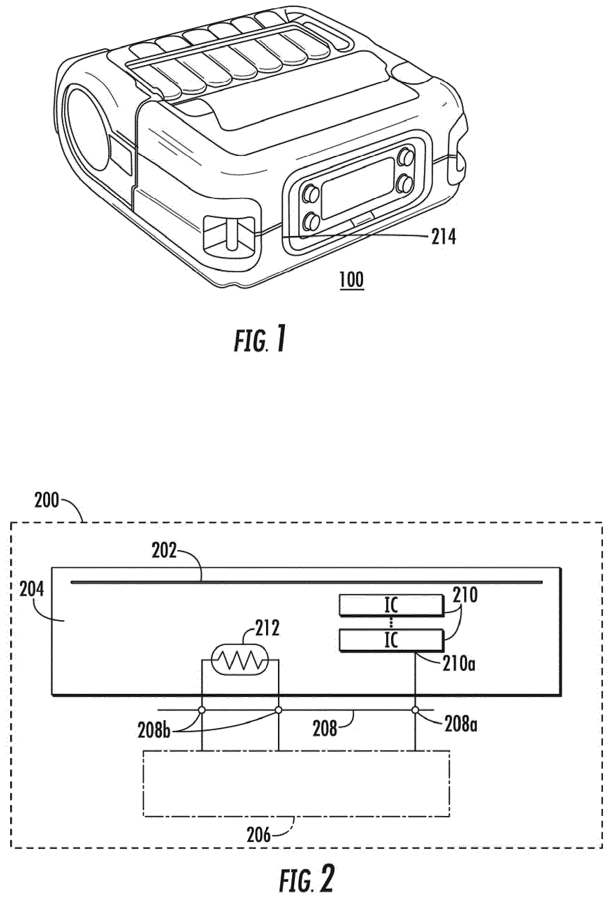

Figure 1 is a perspective view of an imaging system (e.g., mobile printer 100). Figure 2 shows a schematic view of a thermal printhead 200 for use in printer 100. Thermal printhead 200 includes a heating resistor array 202, a substrate 204, a control section 206 (e.g., a controller), a connector 208, a drive integrated circuit (IC) array 210, and a thermistor 212. The control section 206 includes a microprocessor having software to control operation of the printer 100 as well as operation of the thermal printhead 200. Substrate 204 is made of an insulating material such as ceramic and is rectangular for example. Drive IC array 210 and thermistor 212 may be arranged on a printed circuit board or flex circuit that are mounted on substrate 204. The elongated heating resistor array 202 is also formed on substrate 204 and is connected with control section 206 via a connector 208. The heating resistor 202 is also connected with a plurality of electrodes (not shown). These electrodes may be equally spaced along the heating resistor 202, allowing the divided portions (heating dots) of the heating resistor 202 to be energized selectively. The drive IC array 210 provides control over the printing operation through the selective power application to the heating resistor array 202 via the electrodes described above. The control section 206 sends signals necessary for performing the printing operation to drive IC array 210. These signals include, for example, a printing data signal, a clock signal, a latch signal, and a strobe signal. The drive IC array 210 has a strobe signal terminal 210a, to which the strobe signal is sent via a strobe signal terminal 208a of the connector 208. The strobe signal determines a duration of time for the heating resistor 202 to be energized. While the strobe signal assumes HIGH level, the drive IC array 210 makes power available selectively to the heating resistor 202. The substrate 204 is provided with a thermistor 212. The thermistor 212 is connected with the thermal printer's control section 206 via a thermistor terminal 208b of the connector 208. The connector 208 establishes an electrical connection between the thermal printhead 200 and the printer 100. The control section 206 obtains information regarding the temperature of the substrate 204 based on a resistance value of the thermistor 212. If the thermistor 212 gives an extremely small resistance value (meaning that the substrate 204 is at an abnormally high temperature), the control section 206 may stop sending printing commands to the drive IC 210 in order to prevent the thermal printhead 200 from operating abnormally or being damaged.

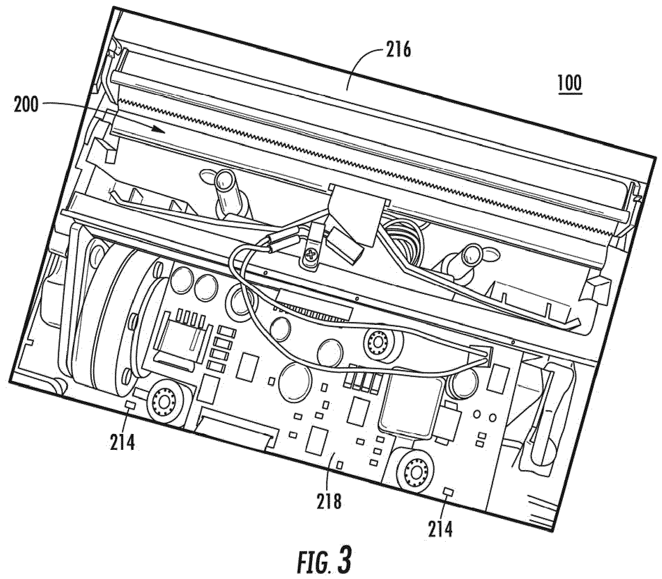

Figure 3 is a top view of the inside of printer 100 with a sensor (e.g., a multi-axial accelerometer) 214 (or plurality of sensors) positioned in (or on) the printer 100. In the mobile printer 100 layout the thermal printhead 200 is located near the front liquid crystal display (LCD) 216. Sensor 214 is installed on a printed circuit board (PCB) 218 next to the thermal printhead 200. To have better sensitivity the sensors are usually installed at the corner sides of the printer. A multi-axial accelerometer can detect, for example, the x and y coordinates of movement separately.

Currently there is no detection and control mechanism for printer positioning or movement during printing, so the printer 100 can keep printing when the print job starts regardless of whether the printer is stationary or falling. When a falling printer reaches the floor there will be a G-force (approximately 9.8 meters per second squared) impact and the print quality (PQ) could be affected because the thermal printhead is not at its optimum position. Also, the thermal printhead could be damaged because of the impact force depending on the falling distance and the surface of the printer 100 touching the ground.

Typically a single sensor 214 (such as a multi-axial accelerometer) may be installed in the printer 100 to sense any vibration, shock, acceleration, or freefall activity during printing. Alternatively, multiple accelerometers 214 may be used to detect orientation of the printer as well or to increase the accuracy of the data collected by averaging return values over multiple accelerometers. In such a way the printer 100 can be monitored for different aspects of motions - vibration, acceleration, shock, and/or free-fall. Based on a motion threshold set by the software in a control section 206, the printing function can be paused or stopped when the threshold limit is exceeded. The thermal printhead 200 can be slightly lifted and parked in an impact-absorbing position before the impact ends to protect the impact damage to the thermal printhead. When the impact finishes, the printing job can be resumed. In such way the printing disruption is minimized while the print quality is maintained and the thermal printhead 200 damage is prevented.

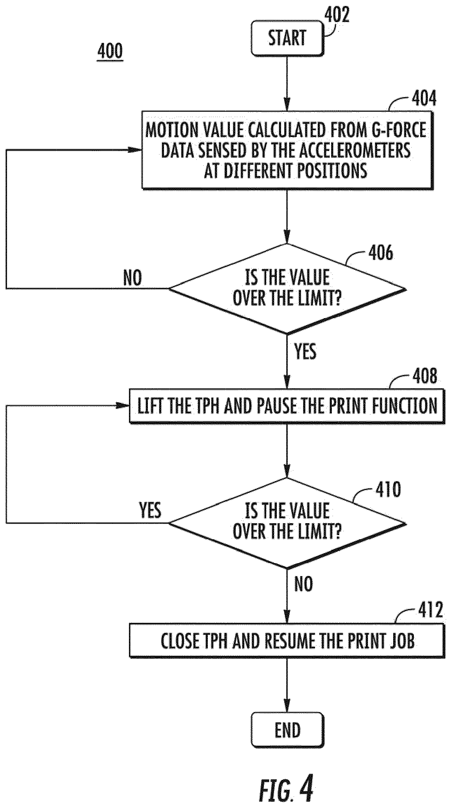

Fig. 4 is a flowchart description 400 of the process of active printing consistency control and damage protection that takes place in control section 206. When a print job starts 402, the sensor(s) 214 would return G-force values to the printer controller 404. The G-force values may vary depending on the environment the printer 100 is operating in. For example, the printer 100 may be subject to a plurality of different aspects of motion - either individually or collectively - such as vibration, acceleration, shock, and/or falling. When the calculated values of the sensor(s) 214 exceeds a predetermined limit (or threshold) 406, the thermal printhead 200 will be lifted from a first position to a second safety position and a printing job paused 408. There may be a plurality of different pre-defined limits for each of the different aspects of motion. For example, a freefall motion is vastly different than vibration and shock. So each type of motion could have a different threshold that could exceed a predetermined threshold for each of freefall, shock, vibration, etc. In an alternative embodiment, the different aspects of motion may be cumulatively calculated to reach the pre-defined limit to pause the print job. The sensors 214 will continually monitor the G-force values until they fall within the limit 410 of normal operation conditions. The thermal printhead 200 can then go back to the normal (or first) position and the print job can resume 412.

By utilizing the system and method disclosed herein, abnormal printing may be eliminated where bad print quality can be seen. It also protects the thermal printhead 200 from damage which can happen where there is a big impact during printing.

In the specification and/or figures, typical embodiments of the invention have been disclosed. The present invention is not limited to such exemplary embodiments. The use of the term "and/or" includes any and all combinations of one or more of the associated listed items. The figures are schematic representations and so are not necessarily drawn to scale. Unless otherwise noted, specific terms have been used in a generic and descriptive sense and not for purposes of limitation.

Devices that are described as in "communication" with each other or "coupled" to each other need not be in continuous communication with each other or in direct physical contact, unless expressly specified otherwise. On the contrary, such devices need only transmit to each other as necessary or desirable, and may actually refrain from exchanging data most of the time. For example, a machine in communication with or coupled with another machine via the Internet may not transmit data to the other machine for long period of time (e.g. weeks at a time). In addition, devices that are in communication with or coupled with each other may communicate directly or indirectly through one or more intermediaries.

## Claims

1. An imaging system comprising:
a thermal printhead (200) configured to operate in a first position;
at least one sensor (214) configured to detect an aspect of motion of the imaging system and output a signal; and
a controller (206) to halt operation of the thermal printhead and move the thermal printhead to a second position when the signal is above a first predetermined threshold (406) and to move the thermal printhead to the first position to resume operation when the signal is below a second predetermined threshold.

2. The imaging system of claim 1, wherein the first predetermined threshold and the second predetermined threshold are the same.

3. The imaging system of claim 1, wherein the aspects of motion of the imaging system measured by the at least one sensor include the group consisting of vibration, shock, and acceleration.

4. The imaging system of claim 1, wherein the at least one sensor continually monitors the motion of the imaging system.

5. The imaging system of claim 1, comprising three additional sensors combined with the at least one sensor so that the four sensors are installed at each of four corners of the imaging system to measure the orientation of the imaging system.

6. The imaging system of claim 1, wherein the first predetermined threshold is 1 G-force.

7. The imaging system of claim 1, wherein the at least one sensor is a multi-axial accelerometer.

8. A method, comprising:
calculating aspects of motion measured by at least one sensor (214) on an imaging system;
if the calculated aspects of motion exceed a first predetermined threshold (406), halting, with a controller (206) in the imaging system, operation of a thermal printhead (200) in the imaging system and moving the thermal printhead; and
after the calculated aspects of motion exceeds the first predetermined threshold and then are below a second predetermined threshold, moving the thermal printhead to a first operating position.

9. The method of claim 8, wherein the first predetermined threshold and the second predetermined threshold are the same.

10. The method of claim 8, wherein the aspects of motion comprise vibration, shock, and acceleration.

11. The method of claim 8, wherein the first predetermined threshold is 1 G-force.

12. The method of claim 8, wherein the at least one sensor is a multi-axial accelerometer.

13. The method of claim 8, comprising calculating aspects of motion measured by at least three sensors on different locations of the imaging system.

14. The method of claim 8, comprising resuming a printing job after moving the thermal printhead to the first operating position.

## Patentansprüche

1. Bildgebungssystem, umfassend:
einen Thermodruckkopf (200), der dafür ausgelegt ist, in einer ersten Position betrieben zu werden;
wenigstens einen Sensor (214), der dafür ausgelegt ist, einen Bewegungsaspekt des Bildgebungssystems zu erkennen und ein Signal auszugeben; und
eine Steuerung (206), um den Betrieb des Thermodruckkopfes anzuhalten und den Thermodruckkopf in eine zweite Position zu bewegen, wenn das Signal über einem ersten vorbestimmten Schwellwert (406) liegt, und den Thermodruckkopf in die erste Position zu bewegen, um den Betrieb wieder aufzunehmen, wenn das Signal unter einem zweiten vorbestimmten Schwellwert liegt.

2. Bildgebungssystem nach Anspruch 1, wobei der erste vorbestimmte Schwellwert und der zweite vorbestimmte Schwellwert identisch sind.

3. Bildgebungssystem nach Anspruch 1, wobei die Bewegungsaspekte des Bildgebungssystems, die von dem wenigstens einen Sensor gemessen werden, die Gruppe bestehend aus Vibration, Stoß und Beschleunigung beinhalten.

4. Bildgebungssystem nach Anspruch 1, wobei der wenigstens eine Sensor kontinuierlich die Bewegung des Bildgebungssystems überwacht.

5. Bildgebungssystem nach Anspruch 1, umfassend drei weitere Sensoren, die mit dem wenigstens einen Sensor derart kombiniert sind, dass die vier Sensoren an jeder der vier Ecken des Bildgebungssystems installiert sind, um die Ausrichtung des Bildgebungssystems zu messen.

6. Bildgebungssystem nach Anspruch 1, wobei der erste vorbestimmte Schwellwert eine Kraft von 1 G ist.

7. Bildgebungssystem nach Anspruch 1, wobei der wenigstens eine Sensor ein mehrachsiger Beschleunigungsmesser ist.

8. Verfahren, umfassend:
Berechnen von Bewegungsaspekten, die von dem wenigstens einen Sensor (214) an einem Bildgebungssystem gemessen werden;
falls die berechneten Bewegungsaspekte einen ersten vorbestimmten Schwellwert (406) übersteigen, Anhalten, mittels einer Steuerung (206) im Bildgebungssystem, des Betriebs eines Thermodruckkopfes (200) im Bildgebungssystem und Bewegen des Thermodruckkopfes; und
nachdem die berechneten Bewegungsaspekte den ersten vorbestimmten Schwellwert überschritten haben und danach unter einem zweiten vorbestimmten Schwellwert liegen, Bewegen des Thermodruckkopfes in eine erste Betriebsposition.

9. Verfahren nach Anspruch 8, wobei der erste vorbestimmte Schwellwert und der zweite vorbestimmte Schwellwert identisch sind.

10. Verfahren nach Anspruch 8, wobei die Bewegungsaspekte Vibration, Stoß und Beschleunigung umfassen.

11. Verfahren nach Anspruch 8, wobei der erste vorbestimmte Schwellwert eine Kraft von 1 G ist.

12. Verfahren nach Anspruch 8, wobei der wenigstens eine Sensor ein mehrachsiger Beschleunigungsmesser ist.

13. Verfahren nach Anspruch 8, umfassend das Berechnen von Bewegungsaspekten, die von wenigstens drei Sensoren an verschiedenen Positionen am Bildgebungssystem gemessen werden.

14. Verfahren nach Anspruch 8, umfassend das Wiederaufnehmen eines Druckauftrags, nachdem der Thermodruckkopf in die erste Betriebsposition bewegt wurde.

## Revendications

1. Système d'imagerie comprenant :
une tête d'impression thermique (200) configurée pour fonctionner dans une première position ;
au moins un capteur (214) configuré pour détecter un aspect de déplacement du système d'imagerie et délivrer un signal ; et
un contrôleur (206) pour interrompre le fonctionnement de la tête d'impression thermique et déplacer la tête d'impression thermique jusqu'à une deuxième position quand le signal est supérieur à un premier seuil prédéterminé (406) et pour déplacer la tête d'impression thermique jusqu'à la première position pour reprendre le fonctionnement quand le signal est inférieur à un deuxième seuil prédéterminé.

2. Système d'imagerie de la revendication 1, dans lequel le premier seuil prédéterminé et le deuxième seuil prédéterminé sont identiques.

3. Système d'imagerie de la revendication 1, dans lequel les aspects de déplacement du système d'imagerie mesurés par l'au moins un capteur englobent le groupe constitué par une vibration, un choc, et une accélération.

4. Système d'imagerie de la revendication 1, dans lequel l'au moins un capteur surveille en continu le déplacement du système d'imagerie.

5. Système d'imagerie de la revendication 1, comprenant trois capteurs supplémentaires combinés à l'au moins un capteur de telle sorte que les quatre capteurs sont installés à chacun de quatre coins du système d'imagerie pour mesurer l'orientation du système d'imagerie.

6. Système d'imagerie de la revendication 1, dans lequel le premier seuil prédéterminé est une force de 1 G.

7. Système d'imagerie de la revendication 1, dans lequel l'au moins un capteur est un accéléromètre multiaxe.

8. Procédé, comprenant :
le calcul d'aspects de déplacement mesurés par au moins un capteur (214) sur un système d'imagerie ;
si les aspects de déplacement calculés dépassent un premier seuil prédéterminé (406), l'interruption, avec un contrôleur (206) dans le système d'imagerie, du fonctionnement d'une tête d'impression thermique (200) dans le système d'imagerie et le déplacement de la tête d'impression thermique ; et
après que les aspects de déplacement calculés ont dépassé le premier seuil prédéterminé et sont ensuite inférieurs à un deuxième seuil prédéterminé, le déplacement de la tête d'impression jusqu'à une première position de fonctionnement.

9. Procédé de la revendication 8, dans lequel le premier seuil prédéterminé et le deuxième seuil prédéterminé sont identiques.

10. Procédé de la revendication 8, dans lequel les aspects de déplacement comprennent une vibration, un choc, et une accélération.

11. Procédé de la revendication 8, dans lequel le premier seuil prédéterminé est une force de 1 G.

12. Procédé de la revendication 8, dans lequel l'au moins un capteur est un accéléromètre multiaxe.

13. Procédé de la revendication 8, comprenant le calcul d'aspects de déplacement mesurés par au moins trois capteurs sur différents emplacements du système d'imagerie.

14. Procédé de la revendication 8, comprenant la reprise d'un travail d'impression après le déplacement de la tête d'impression thermique jusqu'à la première position de fonctionnement.
